# EUROPEAN PATENT APPLICATION

(11) **EP 3 731 013 A1**
(43) Date of publication of application: **28.10.2020**
(21) Application number: 18893140.6
(22) Date of filing: 03.12.2018
(51) Int. Cl.: G03B 9/06, G02B 7/02, G03B 9/02

(54) **DIAPHRAGM DEVICE AND LENS BARREL**

(30) Priority: 19.12.2017 JP 2017242670
(71) Applicant: Nittoh Inc., Suwa-shi, Nagano 3920131 (JP)
(72) Inventor: ENDO Junichi, Suwa-shi, Nagano 392-0021 (JP)
(74) Representative: Schmitt-Nilson Schraud Waibel Wohlfrom Patentanwälte Partnerschaft mbB
(86) International application number: PCT/JP2018/044342
(87) International publication number: WO 2019/124028

(57) **Abstract**

[Problem] To provide a diaphragm device that can be downsized in a radius direction although a diameter of an aperture stop can be accurately set.

[Solution] The diaphragm device includes a bottom plate 12a that is formed in an annular shape on which an aperture M for an optical path is formed, a plurality of diaphragm blades 13 that are attached to the bottom plate 12a in a rotatable manner, a blade rotation member that rotates the diaphragm blades 13 with respect to the bottom plate 12a, and biasing members 16 that bias the respective diaphragm blades 13 to one side in a rotation direction of the multiple diaphragm blades 13 with respect to the bottom plate 12a. The blade rotation member has cam grooves 14a that cause the diaphragm blades 13 to rotate with respect to the bottom plate 12a to change a diameter of an aperture stop. The diaphragm blades 13 each have a cam protrusion 19 that is fixed thereto and engaged with the cam groove 14a. The diaphragm blades 13 each have a biasing protrusion 20 that protrudes from a surface thereof, is fixed thereto, and is engaged with the biasing member 16. The cam protrusion 19 is in contact with a side surface of the cam groove 14a by biasing force of the biasing member 16.

## Description

### Field

The present invention relates to a diaphragm device that changes a diameter of an aperture stop. The invention relates also to a lens barrel including the diaphragm device.

### Background

Diaphragm devices have been known that change diameters of aperture stops (e.g., refer to Patent Literature 1). The diaphragm device described in Patent Literature 1 includes a bottom plate that has a circular shaped aperture with an optical axis as the center, seven diaphragm blades that are attached to the bottom plate in a rotatable manner, and a drive ring that rotates with respect to the bottom plate around the optical axis to rotate the seven diaphragm blades. The bottom plate has a plurality of blade attachment shafts that support the diaphragm blades in a rotatable manner. The diaphragm blades each have an attachment hole into which the blade attachment shaft is inserted. The diaphragm blades each have a cam groove for rotating the diaphragm blade with respect to the bottom plate. The drive ring has connecting shafts each of which is inserted into the cam groove.

In the diaphragm device described in Patent Literature 1, a torsion coil spring is attached to each blade attachment shaft. One arm portion of the torsion coil spring is engaged with a protrusion formed on the bottom plate while the other arm portion of the torsion coil spring is engaged with an outer circumference of the diaphragm blade. The torsion coil springs bias the diaphragm blades in such a direction that the diameter of the aperture stop is increased around the blade attachment shaft. By the biasing force of the torsion coil spring, a side surface of the cam groove (cam surface) formed in the diaphragm blade is constantly in contact with the connection shaft formed on the drive ring. The diaphragm device, thus, can prevent looseness of the diaphragm blades to the drive ring and set accurately the diameter of the aperture stop.

### Citation List

### Patent Literature

Patent Literature 1: Japanese Patent Application Laid-open No. 2015-222392

### Summary

### Technical Problem

The diaphragm device described in Patent Literature 1, in which the diaphragm blades are biased by the torsion coil springs, can prevent looseness of the diaphragm blades to the drive ring and set accurately the diameter of the aperture stop, as described above. The diaphragm device described in Patent Literature 1, however, easily allows an increase in size in its radius direction because the arm portion of the torsion coil spring attached to the blade attachment shaft serving as the rotation center of the diaphragm blade is engaged with the outer circumference of the diaphragm blade.

A problem to be solved by the invention is to provide a diaphragm device that can be downsized in its radius direction although the diaphragm device can accurately set a diameter of an aperture stop. Another problem to be solved by the invention is to provide a lens barrel including the diaphragm device.

### Solution to Problem

To solve the problem described above, a diaphragm device of the invention that changes a diameter of an aperture stop includes a bottom plate that is formed in an annular shape on which an aperture for an optical path is formed, a plurality of diaphragm blades that are arranged around an optical axis of the optical path and attached to the bottom plate in a rotatable manner, a blade rotation member that is formed in an annular shape and is rotated relative to the bottom plate in a circumferential direction around the optical axis to rotate the diaphragm blades with respect to the bottom plate, and biasing members that bias the respective diaphragm blades to one side in a rotation direction of the multiple diaphragm blades with respect to the bottom plate. Either one of the set of the diaphragm blades and the blade rotation member has cam grooves that cause the diaphragm blades to rotate with respect to the bottom plate to change the diameter of the aperture stop. Either the other of the set of the diaphragm blades and the blade rotation member has cam protrusions that are formed thereon or fixed thereto and are engaged with the cam grooves. The diaphragm blades have biasing protrusions that are formed thereon or fixed thereto, protrude from surfaces thereof, and are engaged with the biasing members. The cam protrusions are in contact with side surfaces of the cam grooves by biasing force of the biasing members.

The diaphragm device of the invention includes the biasing members that bias the respective diaphragm blades to one side in the rotation direction of the multiple diaphragm blades with respect to the bottom plate. In the invention, the cam protrusions provided to the other of the set of the diaphragm blades and the blade rotation member are in contact with the side surfaces of the cam grooves provided to either one of the set of the diaphragm blades and the blade rotation member by biasing force of the biasing members. The invention, thus, can prevent looseness of the diaphragm blades with respect to the blade rotation member, thereby making it possible to accurately set the diameter of the aperture stop.

In the invention, the biasing protrusions with which the biasing members are engaged are formed on or fixed to the diaphragm blades such that the biasing protrusions protrude from the surfaces of the diaphragm blades. The invention, thus, makes it possible for the place on which the biasing force of the biasing member acts of the diaphragm blade to be set on an inner side in a radius direction of the diaphragm device in comparison with a case where the arm portion of the torsion coil spring attached to the rotation center of the diaphragm blade is engaged with the outer circumference of the diaphragm blade in the diaphragm device described in Patent Literature 1. The invention, thus, can dispose the biasing members on the inner side in the radius direction of the diaphragm device in comparison with the diaphragm device described in Patent Literature 1, thereby making it possible to downsize the diaphragm device in the radius direction.

In the invention, it is preferable that the bottom plate include biasing member holders each holding a part of the biasing member, and the biasing member holders be disposed on one side of the biasing protrusion in the circumferential direction. This structure allows the biasing member to be disposed along the circumferential direction between the biasing member holder and the biasing protrusion. Therefore, this structure can dispose the biasing members further on the inner side in the radius direction of the diaphragm device, thereby making it possible to further downsize the diaphragm device in the radius direction.

In the invention, it is preferable that the biasing members be torsion coil springs each including: a winding portion in which a coil is wound; a first arm portion extending from one end of the winding portion; and a second arm portion extending from the other end of the winding portion, the first arm portion be engaged with the biasing protrusion, and the biasing member holder be a protrusion that is inserted into an inner circumferential side of the winding portion. This structure makes it possible to easily attach the torsion coil springs, which are the biasing members, to the biasing member holders.

In the invention, it is preferable that the biasing members bias the diaphragm blades in such a direction that the multiple diaphragm blades reduce the diameter of the aperture stop. This structure makes it possible to further reduce the diameter of the aperture stop when the multiple diaphragm blades are rotated to positions that cause the diameter of the aperture stop to be minimum. In a case where the diaphragm blades are biased by the biasing members in such a direction that the multiple diaphragm blades cause the diameter of the aperture stop to be increased, the diameter of the aperture stop becomes large by the gaps between the cam grooves and the cam protrusions when the diaphragm blades are rotated to positions that cause the diameter of the aperture stop to be minimum. In this structure, however, the diameter of the aperture stop becomes small by the gaps between the cam grooves and the cam protrusions when the diaphragm blades are rotated to the positions that cause the diameter of the aperture stop to be minimum. As a result, the diameter of the aperture stop can be further reduced when the diaphragm blades are rotated to the positions that cause the diameter of the aperture stop to be minimum.

In the invention, it is preferable that the diaphragm blades be arranged on one side of the bottom plate in the optical axis direction, which is the direction of the optical axis, the bottom plate have the through holes through which the biasing protrusions pass, the biasing members be disposed on the other side of the bottom plate in the optical axis direction, and the biasing members be engaged with the biasing protrusions on the other side of the bottom plate. This structure makes it possible to prevent interference between the diaphragm blades and the biasing members even when the biasing members are arranged further on the inner side in the radius direction of the diaphragm device. This structure can dispose the biasing members further on the inner side in the radius direction of the diaphragm device, thereby making it possible to further downsize the diaphragm device in the radius direction.

In the invention, it is preferable that the cam protrusion be formed on or fixed to the diaphragm blade and protrude from one surface of the diaphragm blade, the biasing protrusion protrude from the other surface of the diaphragm blade, and the cam protrusion and the biasing protrusion be arranged coaxially. This structure can prevent the diaphragm blade formed in a thin flat plate like shape from being distorted, although the cam protrusion is in contact with the side surface of the cam groove by the biasing force of the biasing member acting on the biasing protrusion.

In the invention, it is preferable that the diaphragm device include an aperture forming member including: a cylindrical unit having an axial center that is the optical axis; and the bottom plate formed in an annular shape having an axial center that is the optical axis and expanding in a flange shape to the outside of the cylindrical unit in the radius direction from one end of the cylindrical unit, and the second arm portions be engaged with the cylindrical unit. This structure makes it possible for the biasing members to be held by the biasing member holder and the cylindrical unit in a stable state. This structure, in which the second arm portions are engaged with the cylindrical unit disposed on the inner side of the bottom plate in the radius direction of the diaphragm device, makes it possible to arrange the biasing members further on the inner side in the radius direction of the diaphragm device. As a result, the diaphragm device can be further downsized in the radius direction.

The diaphragm device of the invention can be used for a lens barrel that includes a diaphragm drive cylinder that is rotated around the optical axis together with the aperture forming member and connection members that are engaged with the cylindrical unit at one ends thereof and engaged with the diaphragm drive cylinder at the other ends thereof. In the lens barrel, the diaphragm device includes a holding cylinder that holds the aperture forming member such that the aperture forming member is rotatable around the optical axis, and the holding cylinder holds the blade rotation member in a state where the movement of the blade rotation member in the circumferential direction is restricted to cause the blade rotation member not to move in the circumferential direction with respect to the holding cylinder.

The lens barrel can downsize the diaphragm device in the radius direction although the diameter of the aperture stop can be accurately set. The lens barrel can downsize the diaphragm device in the radius direction, thereby making it possible to downsize the lens barrel in the radius direction. Further, in the lens barrel, the second arm portions of the torsion coil springs are engaged with the cylindrical unit that holds the one sides of the connection members. As a result, the lens barrel does not need to be provided with an engagement portion with which the second arm portions are engaged. Therefore, the lens barrel makes it possible to simplify the structure of the lens barrel.

### Advantageous Effects of Invention

As described above, the diaphragm device of the invention can downsize the diaphragm device in the radius direction although the diameter of the aperture stop can be accurately set. The lens barrel of the invention can downsize the lens barrel in the radius direction and can also simplify the structure of the lens barrel.

### Brief Description of Drawings

Fig. 1 is a schematic view of an imaging device using a lens barrel according to an embodiment of the invention.
Fig. 2(A) is a perspective view of a part of the lens barrel illustrated in Fig. 1.
Fig. 2(B) is an exploded perspective view of the part of the lens barrel illustrated in Fig. 2(A).
Fig. 3 is a perspective view of a diaphragm device illustrated in Fig. 2.
Fig. 4 is an exploded perspective view of the diaphragm device illustrated in Fig. 3.
Fig. 5 is a front view explaining a structure of the diaphragm device illustrated in Fig. 3.
Fig. 6 is a perspective view of a state where a diaphragm blade is attached to an aperture forming member illustrated in Fig. 4.
Fig. 7 is a perspective view illustrating the state where the diaphragm blade is attached to the aperture forming member illustrated in Fig. 6 when viewed from the opposite side.
Fig. 8 is an enlarged view explaining the structure of E portion in Fig. 5.
Fig. 9 is an enlarged view of a periphery of a gap formed between the diaphragm blades illustrated in Fig. 5.
Fig. 10 is a cross-sectional view explaining a structure of a biasing member holder according to another embodiment of the invention.

### Description of Embodiments

The following describes embodiments of the invention with reference to the accompanying drawings.

### Schematic structure of lens barrel

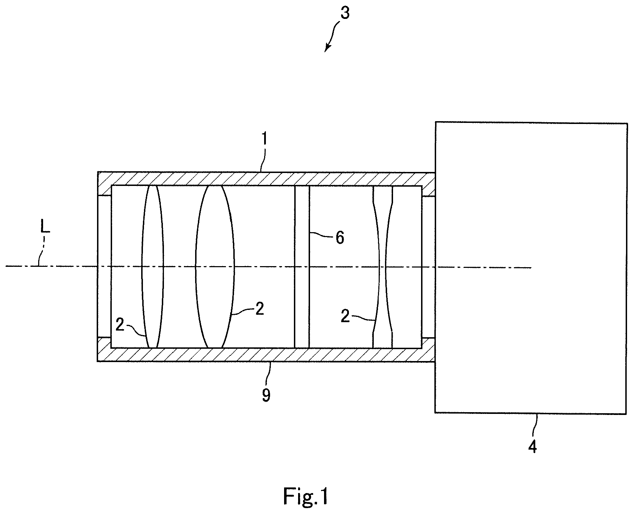

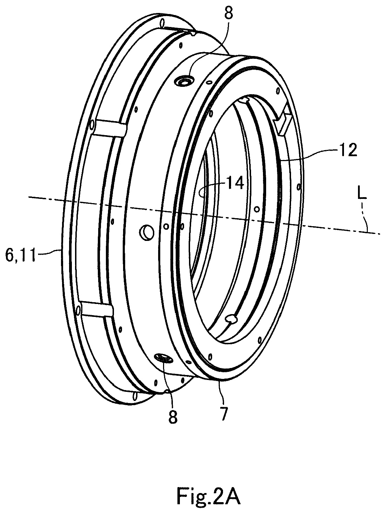

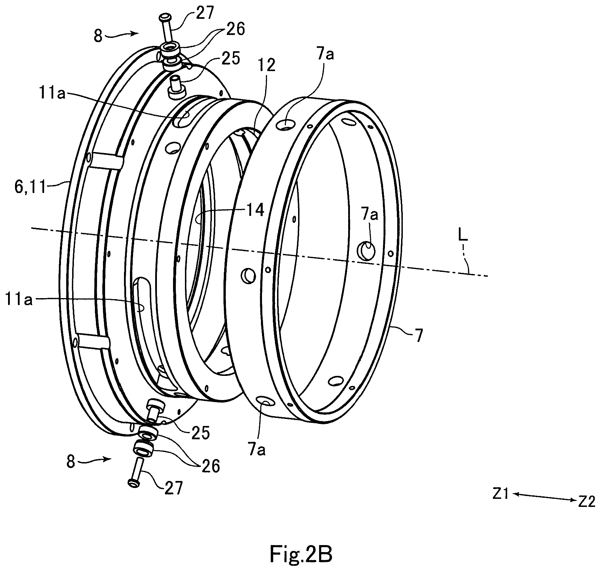

Fig. 1 is a schematic diagram of an imaging device 3 using a lens barrel 1 according to an embodiment of the invention. Fig. 2(A) is a perspective view of a part of the lens barrel 1 illustrated in Fig. 1. Fig. 2(B) is an exploded perspective view of the part of the lens barrel 1 illustrated in Fig. 2(A).

The lens barrel 1 of the invention includes a plurality of lenses 2 and is used by the imaging device 3. The lens barrel 1 is an interchangeable lens, for example, and attached to a device body 4 of the imaging device 3 in a detachable manner. Alternatively, the lens barrel 1 is fixed to the device body 4 to be integrated with the device body 4. The device body 4 includes an imaging element (not illustrated) such as a C-MOS image sensor. The lens barrel 1 is formed in a substantially columnar shape as a whole. An axial center of the lens barrel 1 formed in a substantially columnar shape and an optical axis L of the lenses 2 (i.e., optical axis of an optical path) coincide.

The lens barrel 1 includes a diaphragm device 6 that adjusts an amount of light (light amount) entering an imaging surface of an imaging element by changing a diameter of an aperture stop, a diaphragm drive cylinder 7 that is rotated around the optical axis L together with an aperture forming member 12 included in the diaphragm device 6 as a part of thereof, which is described later, connection members 8 that are engaged with the aperture forming member 12 at one ends thereof and engaged with the diaphragm drive cylinder 7 at the other ends thereof, and a lens barrel body 9 that holds the diaphragm device 6 and the diaphragm drive cylinder 7. In Fig. 1, the diaphragm drive cylinder 7 and the connection members 8 are omitted.

The lens barrel body 9 is fixed to the device body 4 or attached to the device body 4 in a detachable manner. The diaphragm drive cylinder 7 is formed in a cylindrical shape. The axis center of the diaphragm drive cylinder 7 coincides with the optical axis L. The diaphragm drive cylinder 7 is held by the lens barrel body 9 such that the diaphragm drive cylinder 7 can be rotated with respect to the lens barrel body 9 around the optical axis L. In the embodiment, the diaphragm drive cylinder 7 is manually rotated with respect to the lens barrel body 9. The lens barrel 1 may include a rotation mechanism that automatically rotates the diaphragm drive cylinder 7.

### Structure of diaphragm device and specific structure of lens barrel

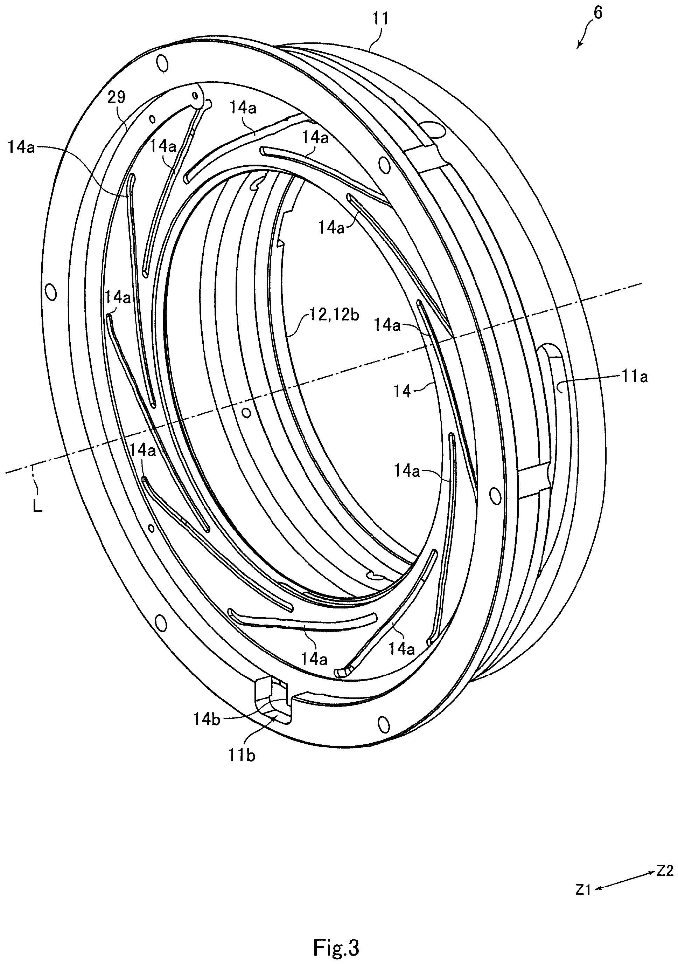

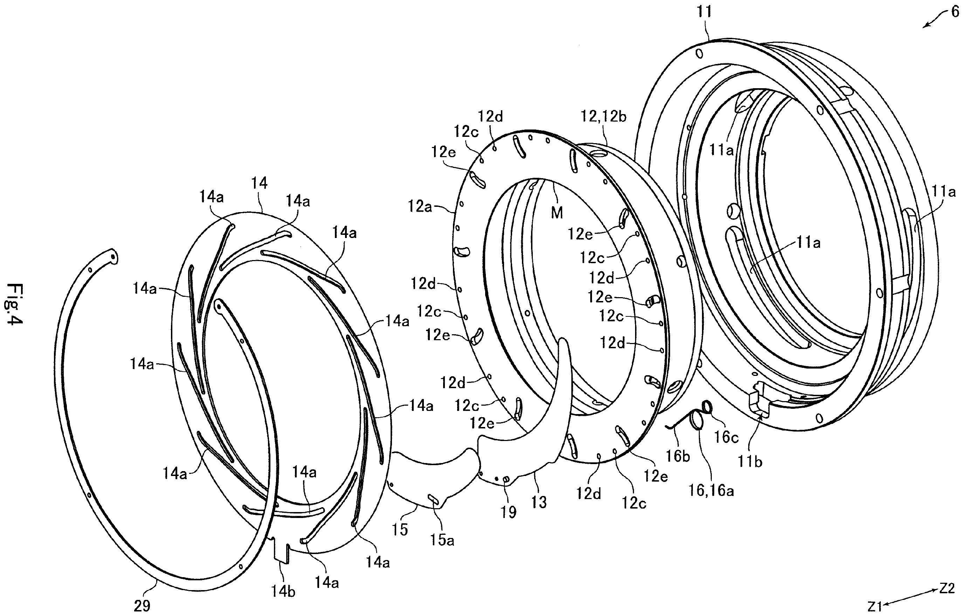

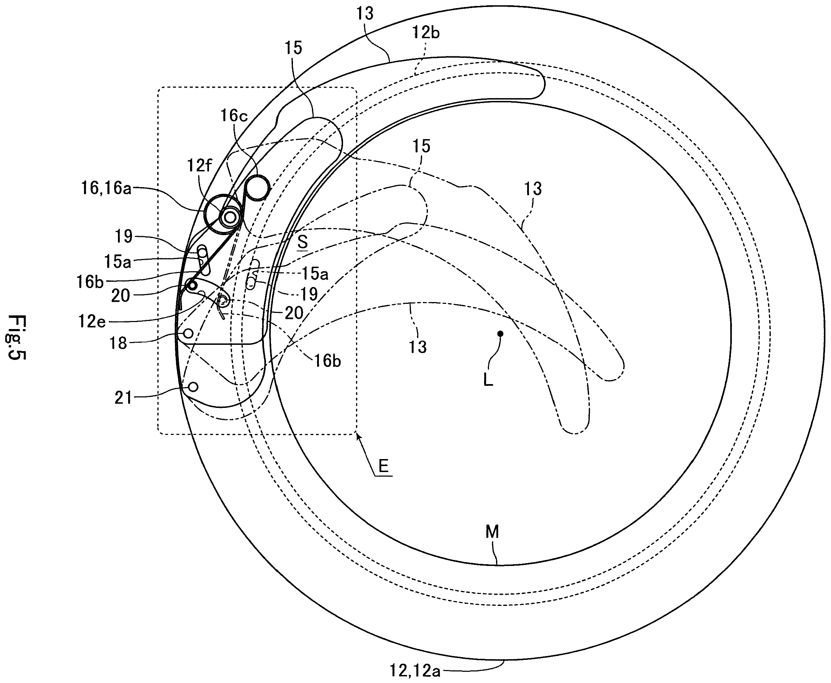

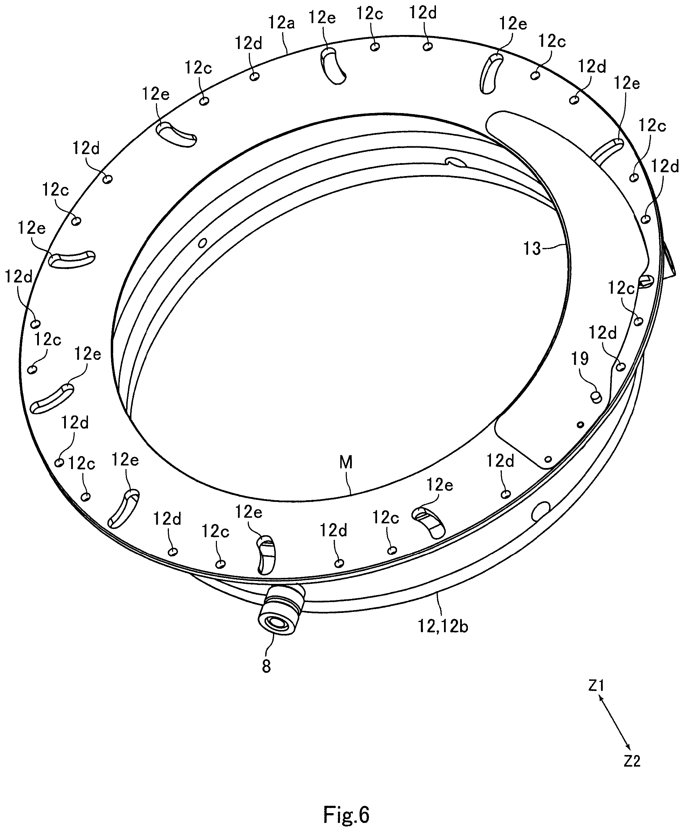

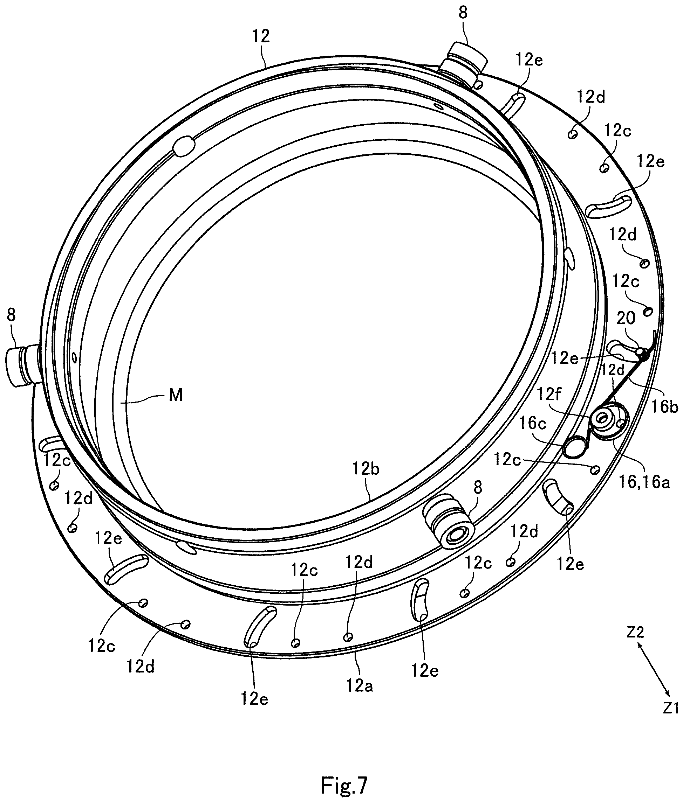

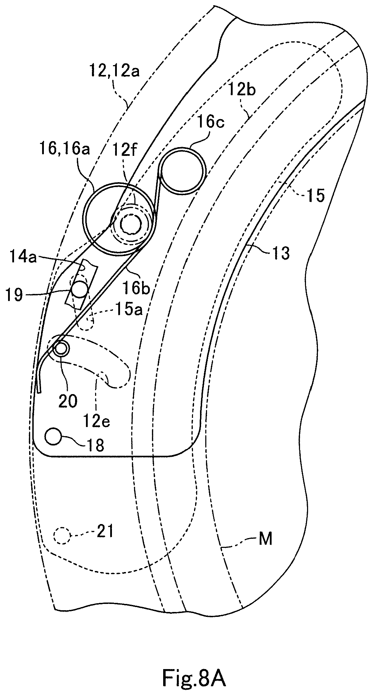

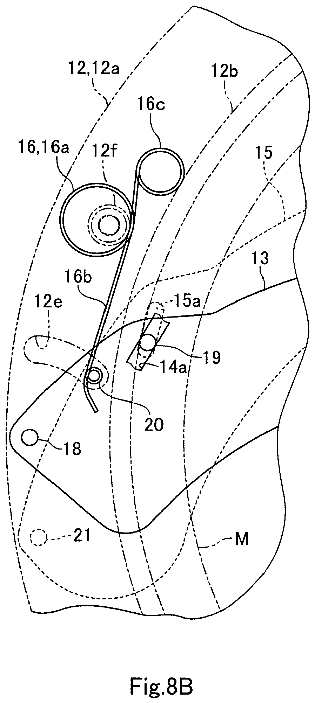

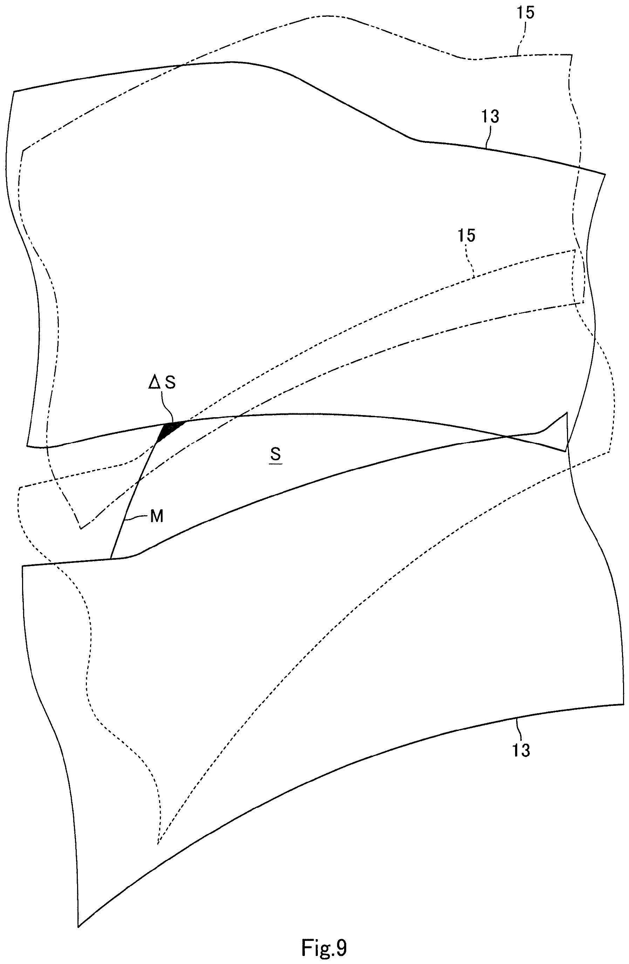

Fig. 3 is a perspective view of the diaphragm device 6 illustrated in Fig. 2. Fig. 4 is an exploded perspective view of the diaphragm device 6 illustrated in Fig. 3. Fig. 5 is a front view explaining a structure of the diaphragm device 6 illustrated in Fig. 3. Fig. 6 is a perspective view of a state where a diaphragm blade 13 is attached to the aperture forming member 12 illustrated in Fig. 4. Fig. 7 is a perspective view illustrating the state where the diaphragm blade 13 is attached to the aperture forming member 12 illustrated in Fig. 6 when viewed from the opposite side. Fig. 8 is an enlarged view explaining the structure of E portion in Fig. 5. Fig. 9 is an enlarged view of a periphery of a gap S formed between the diaphragm blades 13 illustrated in Fig. 5.

In the following description, one side (a Z1 direction side in Fig. 2, for example,) in a direction along the optical axis L (optical axis direction), is defined as a "front" side while a Z2 direction side in Fig. 2, for example, which is the opposite side (the other side in the optical axis direction) is defined as a "rear" side. In the following description, a circumferential direction around the optical axis L is defined as a "circumferential direction" while a direction orthogonal to the optical axis L is defined as a "radius direction".

The diaphragm device 6 is formed in a flat and a substantially cylindrical shape. The axial center of the diaphragm device 6 coincides with the optical axis L. The diaphragm device 6 includes a holding cylinder 11 that is fixed to the lens barrel body 9. The diaphragm device 6 includes the aperture forming member 12 having a bottom plate 12a that is formed in an annular shape on which an aperture M for the optical path is formed, a plurality of diaphragm blades 13 that are arranged around the optical axis L and attached to the bottom plate 12a in a rotatable manner, and a blade rotation member 14 that is formed in an annular shape and is rotated in the circumferential direction relative to the bottom plate 12a to rotate the diaphragm blades 13 with respect to the bottom plate 12a.

The diaphragm device 6 includes a plurality of light leakage prevention blades 15 that prevent light leakage from the gap S (refer to Fig. 5) between the diaphragm blades 13 adjacent in the circumferential direction. Specifically, the diaphragm device 6 includes the same number of light leakage prevention blades 15 as the number of diaphragm blades 13. The light leakage prevention blades 15 are attached to the bottom plate 12a in a rotatable manner. The diaphragm device 6 in the embodiment includes 11 diaphragm blades 13 and 11 light leakage prevention blades 15. Figs. 4 and 8 illustrate only one of each of the diaphragm blades 13 and the light leakage prevention blades 15. Fig. 5 illustrates only two diaphragm blades 13 and only one of the light leakage prevention blades 15. Fig. 6 illustrates only one of the diaphragm blades 13.

Further, the diaphragm device 6 includes biasing members 16 that bias the respective diaphragm blades 13 to one side in a rotation direction of the multiple diaphragm blades 13 with respect to the bottom plate 12a. Specifically, the diaphragm device 6 includes the same number of biasing members 16 as the number of diaphragm blades 13. In other words, the diaphragm device 6 includes 11 biasing members 16. The biasing members 16 in the embodiment are torsion coil springs each including: a winding portion 16a in which a coil is wound; a first arm portion 16b that extends from one end of the winding portion 16a; and a second arm portion 16c that extends from the other end of the winding portion 16a. In the following description, the biasing member 16 is described as the "torsion coil spring 16". Figs. 4, 5, 7, and 8 illustrate only one of the torsion coil springs 16.

The blade rotation member 14 is formed in a plate like shape and an annular shape. The blade rotation member 14 is disposed such that a thickness direction of the blade rotation member 14 and a front-rear direction coincide and the axial center of the blade rotation member 14 and the optical axis L coincide. The blade rotation member 14 has cam grooves 14a that are used for rotating the diaphragm blades 13 with respect to the bottom plate 12a to change the diameter of the aperture stop. Specifically, the blade rotation member 14 has the same number of cam grooves 14a as the number of diaphragm blades 13. In other words, the blade rotation member 14 has 11 cam grooves 14a. The cam grooves 14a pass through the blade rotation member 14 in the front-rear direction. The 11 cam grooves 14a are formed in the circumferential direction at constant pitches. At one place on an outer circumferential side of the blade rotation member 14, a protrusion 14b is formed that protrudes to an outside in the radius direction.

The diaphragm blade 13 is made of a light shielding material having a light shielding property. The diaphragm blade 13 is formed in a thin flat plate like shape. The diaphragm blades 13 are each arranged such that a thickness direction of the diaphragm blade 13 and the front-rear direction coincide. The diaphragm blades 13 are arranged on the rear side of the blade rotation member 14. On a base end portion of the diaphragm blade 13, a rotation center protrusion 18 that serves as the rotation center of the diaphragm blade 13 with respect to the bottom plate 12a, a cam protrusion 19 that is engaged with the cam groove 14a, and a biasing protrusion 20 with which the torsion coil spring 16 is engaged are fixed. The rotation center protrusion 18, the cam protrusion 19, and the biasing protrusion 20 are each formed in a columnar shape.

The rotation center protrusion 18, the cam protrusion 19, and the biasing protrusion 20 each protrude from a corresponding surface of the diaphragm blade 13. Specifically, the cam protrusion 19 protrudes from one surface of the diaphragm blade 13, and the rotation center protrusion 18 and the biasing protrusion 20 protrude from the other surface of the diaphragm blade 13. In the embodiment, the cam protrusion 19 protrudes from the front surface of the diaphragm blade 13 toward the front side while the rotation center protrusion 18 and the biasing protrusion 20 protrude from the rear surface of the diaphragm blade 13 toward the rear side. The rear end portion of the cam protrusion 19 and the front end portions of the rotation center protrusion 18 and the biasing protrusion 20 are fixed to the diaphragm blade 13.

The rotation center protrusion 18, the biasing protrusion 20, and the cam protrusion 19 are arranged in this order from the base end toward the tip of the diaphragm blade 13. The cam protrusion 19 is inserted into the cam groove 14a to be fitted in the cam groove 14a. The outer diameter of the cam protrusion 19 formed in a columnar shape is smaller than the width of the cam groove 14a. The length of the biasing protrusion 20 is longer than that of the rotation center protrusion 18. In the embodiment, the rotation center protrusion 18, the cam protrusion 19, and the biasing protrusion 20 are fixed to the diaphragm blade 13 by riveting. The rotation center protrusion 18, the cam protrusion 19, and the biasing protrusion 20 may be formed integrally with the diaphragm blade 13.

The light leakage prevention blade 15 is formed of a light shielding material having a light shielding property. The light leakage prevention blade 15 is formed in a thin flat plate like shape. The light leakage prevention blades 15 are each arranged such that a thickness direction of the light leakage prevention blade 15 and the front-rear direction coincide. The light leakage prevention blades 15 are arranged between the blade rotation member 14 and the diaphragm blades 13 in the front-rear direction. To a base end portion of the light leakage prevention blade 15, a rotation center protrusion 21 that serves as the rotation center of the light leakage prevention blade 15 with respect to the bottom plate 12a is fixed. The rotation center protrusion 21 is formed in a columnar shape. The rotation center protrusion 21 protrudes from the rear surface of the light leakage prevention blade 15 toward the rear side. In the embodiment, the rotation center protrusion 21 is fixed to the light leakage prevention blade 15 by riveting. The rotation center protrusion 21 may be formed integrally with the light leakage prevention blade 15.

The light leakage prevention blade 15 has a cam groove 15a that is used for rotating the light leakage prevention blade 15 with respect to the bottom plate 12a. The cam groove 15a is formed on a tip side of the rotation center protrusion 21 on the light leakage prevention blade 15. The cam groove 15a passes through the light leakage prevention blade 15 in the front-rear direction. The cam protrusion 19 is inserted into the cam groove 15a.

The aperture forming member 12 is composed of the bottom plate 12a and the cylindrical unit 12b. The cylindrical unit 12b is formed in a cylindrical shape having an axial center that is the optical axis L. The bottom plate 12a is formed in an annular shape having an axial center that is the optical axis L. The aperture M has a circular shape. The bottom plate 12a expands to the outside in the radius direction (i.e., the radius direction of the cylindrical unit 12b) in a flange shape from one end of the cylindrical unit 12b (specifically, the front end of the cylindrical unit 12b). Therefore, the aperture forming member 12 is formed in a cylindrical shape with a flange. The bottom plate 12a is formed in a flat plate like shape. The thickness direction of the bottom plate 12a coincides with the front-rear direction.

The bottom plate 12a is disposed on the rear side of the 11 diaphragm blades 13. In other words, the 11 diaphragm blades 13 are disposed on the front side of the bottom plate 12a. On the outer circumferential side portion of the bottom plate 12a, insertion holes 12c into each of which the rotation center protrusion 18 is inserted and insertion holes 12d into each of which the rotation center protrusion 21 is inserted are formed. In the embodiment, the bottom plate 12a has 11 insertion holes 12c and 11 insertion holes 12d. The 11 insertion holes 12c are formed in the circumferential direction at constant pitches while the 11 insertion holes 12d are also formed in the circumferential direction at constant pitches. The insertion holes 12c and 12d pass through the bottom plate 12a in the front-rear direction. A distance between the optical axis L and the center of the insertion hole 12c in the radius direction and a distance between the optical axis L and the center of the insertion hole 12d in the radius direction are equal. The insertion holes 12c and 12d are each formed in a round hole shape. The rotation center protrusion 18 is supported by the insertion hole 12c in a rotatable manner while the rotation center protrusion 21 is supported by the insertion hole 12d in a rotatable manner.

On an outer circumferential side portion of the bottom plate 12a, through holes 12e are formed through each of which the biasing protrusion 20 passes. In the embodiment, 11 through holes 12e are formed on the bottom plate 12a. The 11 through holes 12e are formed in the circumferential direction with constant pitches. The through holes 12e pass through the bottom plate 12a in the front-rear direction. The through hole 12e is formed in an arc like shape having the insertion hole 12c as the center of curvature. The through hole 12e is disposed between the insertion holes 12c and 12d in the circumferential direction. The tip surface of the biasing protrusion 20 is on the rear side of the rear surface of the bottom plate 12a (refer to Fig. 7).

On the rear surface of the bottom plate 12a, spring holders 12f are formed each of which is used for holding a part of the torsion coil spring 16 (refer to Fig. 7). The spring holder 12f is a protrusion that protrudes from the rear surface of the bottom plate 12a toward the rear side and has a flat and a cylindrical shape. In the embodiment, 11 spring holders 12f are formed on the rear surface of the bottom plate 12a. The 11 spring holders 12f are formed in the circumferential direction at constant pitches. The spring holder 12f is inserted on an inner circumferential side of the winding portion 16a of the torsion coil spring 16. The height of the spring holder 12f in the front-rear direction is larger than the width of the winding portion 16a in the front-rear direction. The spring holder 12f in the embodiment is the biasing member holder. Figs. 5, 7, and 8 illustrate only one of the spring holders 12f.

As illustrated in Fig. 7, the spring holder 12f is formed on the inner side of the insertion hole 12d in the radius direction such that the spring holder 12f is adjacent with the insertion hole 12d in the radius direction. The spring holder 12f is disposed at the position off from the rotation center protrusion 18. As described above, the through hole 12e is disposed between the insertion holes 12c and 12d in the circumferential direction. The spring holder 12f disposed adjacent with the insertion hole 12d in the radius direction and the biasing protrusion 20 that passes through the through hole 12e are, thus, arranged adjacent in the circumferential direction. The spring holder 12f is disposed on one side of the biasing protrusion 20 in the circumferential direction.

One end side of the connection member 8 having a columnar shape is engaged with the cylindrical unit 12b. Specifically, the one end side of the connection member 8 is fixed to the cylindrical unit 12b. The one end side of each of three connection members 8 is fixed to the cylindrical unit 12b. The three connection members 8 protrude from the outer circumferential surface of the cylindrical unit 12b to the outside in the radius direction. The three connection members 8 are arranged at equal angular pitches around the optical axis L. The connection member 8 includes, as illustrated in Fig. 2, a stepped shaft 25, two cylindrical members 26 that have a cylindrical shape and into which the stepped shaft 25 is inserted, and a screw 27 that is used for fixing the two cylindrical members 26 to the stepped shaft 25.

The torsion coil spring 16 is composed of the winding portion 16a, the first arm portion 16b, and the second arm portion 16c, as described above. The first arm portion 16b and the second arm portion 16c extend in different directions from the winding portion 16a. The tip portion of the first arm portion 16b is slightly bent. The tip portion of the second arm portion 16c is wound in a circular shape. As described above, the spring holder 12f is inserted into the winding portion 16a and the torsion coil spring 16 is disposed on the rear side of the bottom plate 12a.

The first arm portion 16b is engaged with the biasing protrusion 20. The torsion coil spring 16 is engaged with the biasing protrusion 20 on the rear side of the bottom plate 12a. Specifically, as illustrated in Fig. 7, the tip portion of the first arm portion 16b is in contact with, from the outside in the radius direction with certain contact pressure, the outer circumferential surface of the tip portion of the biasing protrusion 20 that protrudes on the rear side of the rear surface of the bottom plate 12a. The second arm portion 16c is engaged with the cylindrical unit 12b of the aperture forming member 12. Specifically, the tip portion of the second arm portion 16c is in contact with, from the outside in the radius direction with certain contact pressure, the outer circumferential surface of the cylindrical unit 12b. The torsion coil spring 16 is held by the aperture forming member 12 by the cylindrical unit 12b and the spring holder 12f.

The holding cylinder 11 is formed in a cylindrical shape with a flange portion on the front end side thereof. The axial center of the holding cylinder 11 coincides with the optical axis L. On the inner circumferential side of the holding cylinder 11, the aperture forming member 12, the diaphragm blades 13, the blade rotation member 14, the light leakage prevention blades 15, and the torsion coil springs 16 are arranged. To the inner circumferential surface at the front end portion of the holding cylinder 11, a snap ring 29 is attached. The snap ring 29 prevents the aperture forming member 12, the diaphragm blades 13, the blade rotation member 14, the light leakage prevention blades 15, and the torsion coil springs 16 from coming off from the inner circumferential side of the holding cylinder 11.

The holding cylinder 11 holds the aperture forming member 12 such that the aperture forming member 12 is rotatable around the optical axis L. The holding cylinder 11 has through holes 11a through each of which the connection member 8 passes. The through holes 11a pass through the holding cylinder 11 in the radius direction. The through hole 11a is an oblong hole a longitudinal direction of which is the circumferential direction. The through holes 11a are formed at three places in the circumferential direction at constant pitches. On the inner circumferential side of the holding cylinder 11, a facing surface is formed that faces the rear surface of the bottom plate 12a while the facing surface and the rear surface have a distance therebetween in the front-rear direction. The facing surface prevents the torsion coil springs 16 held by the aperture forming member 12 from coming off from the aperture forming member 12.

On the inner circumferential side at the front end portion of the holding cylinder 11 (i.e., on the inner circumferential side of the flange portion), a recess 11b is formed with which the protrusion 14b of the blade rotation member 14 is engaged. The protrusion 14b is fitted in the recess 11b, thereby causing the blade rotation member 14 not to move in the circumferential direction with respect to the holding cylinder 11. The holding cylinder 11 holds the blade rotation member 14 in a state where the movement of the blade rotation member 14 in the circumferential direction is restricted to cause the blade rotation member 14 not to move in the circumferential direction with respect to the holding cylinder 11.

Into the inner circumferential side of the diaphragm drive cylinder 7, a rear end side portion of the holding cylinder 11 is inserted. The diaphragm drive cylinder 7 can be rotated with respect to the holding cylinder 11 around the optical axis L. The other end sides of the connection members 8 are engaged with the diaphragm drive cylinder 7. Specifically, the diaphragm drive cylinder 7 has insertion holes 7a into each of which the other end side of the connection member 8 having a columnar shape is inserted (refer to Fig. 2(B)). The insertion holes 7a pass through the diaphragm drive cylinder 7 in the radius direction. The insertion hole 7a is a round hole. The insertion holes 7a are formed at three places in the circumferential direction at constant pitches.

In the lens barrel 1, when the diaphragm drive cylinder 7 is rotated with respect to the lens barrel body 9, the aperture forming member 12 is rotated together with the diaphragm drive cylinder 7 with respect to the holding cylinder 11, resulting in the aperture forming member 12 being rotated with respect to the blade rotation member 14. When the aperture forming member 12 is rotated with respect to the blade rotation member 14, the 11 diaphragm blades 13 are rotated with respect to the bottom plate 12a, resulting in the diameter of the aperture stop being changed. Specifically, when the 11 diaphragm blades 13 are rotated with respect to the bottom plate 12a toward the inside in the radius direction, the diameter of the aperture stop is reduced while when the 11 diaphragm blades 13 are rotated with respect to the bottom plate 12a toward the outside in the radius direction, the diameter of the aperture stop is increased.

When the aperture forming member 12 is rotated with respect to the blade rotation member 14, the 11 light leakage prevention blades 15 are rotated with respect to the bottom plate 12a. In the embodiment, when the diameter of the aperture stop is reduced, as illustrated in Fig. 5, the gap S occurs between the diaphragm blades 13 adjacent in the circumferential direction in the aperture M. The light leakage prevention blades 15 cover the gap S occurring between the diaphragm blades 13 adjacent in the circumferential direction from the front side, thereby preventing light leakage from the gap S.

In the embodiment, when the diameter of the aperture stop is reduced, as illustrated in Fig. 9, one light leakage prevention blade 15 (the light leakage prevention blade 15 illustrated with the broken line in Fig. 9) cannot completely cover the gap S. As a result, a tiny gap ΔS (painted out portion in Fig. 9) occurs between the diaphragm blades 13 adjacent in the circumferential direction in the aperture M unless the gap S is completely covered by one light leakage prevention blade 15. In the embodiment, the tiny gap ΔS is covered by the light leakage prevention blade 15 (the light leakage prevention blade 15 illustrated with the two dot chain line in Fig. 9) adjacent with, in the circumferential direction, the light leakage prevention blade 15 (the light leakage prevention blade 15 illustrated with the broken line in Fig. 9) that covers a majority of the gap S excluding the tiny gap ΔS. In other words, the gap S is completely covered by two light leakage prevention blades 15.

The torsion coil spring 16 biases the diaphragm blade 13 toward the inside in the radius direction. In other words, the torsion coil springs 16 bias the diaphragm blades 13 in such a direction that the multiple diaphragm blades 13 cause the diameter of the aperture stop to be reduced. The cam protrusion 19 fixed to the diaphragm blade 13 is in contact with a side surface of the cam groove 14a (cam surface) of the blade rotation member 14 (refer to Fig. 8) by the biasing force of the torsion coil spring 16. Specifically, the cam protrusion 19 is in contact with the side surface inside the cam groove 14a in the radius direction by the biasing force of the torsion coil spring 16. More specifically, the cam protrusion 19 is constantly in contact with the side surface inside the cam groove 14a in the radius direction by the biasing force of the torsion coil spring 16 from a state where the diameter of the aperture stop is maximum (refer to Fig. 8(A)) to a state where the diameter of the aperture stop is minimum (refer to Fig. 8(B)).

### Major effects of the embodiment

As described above, the diaphragm device 6 that changes the diameter of the aperture stop in the embodiment includes the bottom plate 12a that is formed in an annular shape on which the aperture M for the optical path is formed, the multiple diaphragm blades 13 that are arranged around the optical axis L of the optical path and attached to the bottom plate 12a in a rotatable manner, the blade rotation member 14 that is rotated relative to the bottom plate 12a in the circumferential direction around the optical axis L to rotate the diaphragm blades 13 with respect to the bottom plate 12a, and the torsion coil springs (biasing members) 16 that bias the respective diaphragm blades 13 to one side in the rotation direction of the multiple diaphragm blades 13 with respect to the bottom plate 12a. The blade rotation member 14 has the cam grooves 14a that are used for rotating the diaphragm blades 13 with respect to the bottom plate 12a to change the diameter of the aperture stop. The diaphragm blades 13 each have the cam protrusion 19 that is fixed thereto and engaged with the cam groove 14a. The diaphragm blades 13 each have the biasing protrusion 20 that is fixed thereto, protrudes from the surface of the diaphragm blades 13, and is engaged with the torsion coil spring 16. The cam protrusion 19 is in contact with the side surface of the cam groove 14a by the biasing force of the torsion coil spring 16.

In this way, in the embodiment, the diaphragm device 6 includes the torsion coil springs 16 that bias the respective diaphragm blades 13 to one side in the rotation direction of the multiple diaphragm blades 13 with respect to the bottom plate 12a. In the embodiment, the cam protrusion 19 provided on the diaphragm blade 13 is in contact with the side surface of the cam groove 14a provided in the blade rotation member 14 by the biasing force of the torsion coil spring 16. The embodiment, thus, can prevent looseness of the diaphragm blades 13 with respect to the blade rotation member 14 and accurately set the diameter of the aperture stop.

In the embodiment, the biasing protrusion 20 with which the torsion coil spring 16 is engaged is fixed to the diaphragm blade 13 such that the biasing protrusion 20 protrudes from the surface of the diaphragm blade 13. The embodiment, thus, makes it possible for the place on which the biasing force of the torsion coil spring 16 acts of the diaphragm blade 13 to be set on the inner side in the radius direction of the diaphragm device 6 in comparison with a case where the arm portion of the torsion coil spring attached to the rotation center of the diaphragm blade is engaged with the outer circumference of the diaphragm blade in the diaphragm device described in Patent Literature 1. The embodiment, thus, can dispose the torsion coil springs 16 on the inner side in the radius direction of the diaphragm device 6 in comparison with the diaphragm device described in Patent Literature 1, thereby making it possible to downsize the diaphragm device 6 in the radius direction.

As described in the embodiment, it is preferable that the bottom plate 12a include spring holders (biasing member holders) 12f each holding a part of the torsion coil spring 16 and the spring holders 12f each are disposed on one side of the biasing protrusion 20 in the circumferential direction. This structure allows the torsion coil spring 16 to be disposed along the circumferential direction between the spring holder 12f and the biasing protrusion 20. In other words, the first arm portion 16b is disposed along the circumferential direction. Therefore, this structure can dispose the torsion coil springs 16 further on the inner side in the radius direction of the diaphragm device 6, thereby making it possible to further downsize the diaphragm device 6 in the radius direction.

As described in the embodiment, it is preferable that the biasing member 16 be the torsion coil spring that includes the winding portion 16a in which a coil is wound, the first arm portion 16b extending from one end of the winding portion 16a, and the second arm portion 16c extending from the other end of the winding portion 16a, the first arm portion 16b be engaged with the biasing protrusion 20, and the spring holder 12f be the protrusion inserted into the inner circumferential side of the winding portion 16a. This structure makes it possible to easily attach the torsion coil springs, which are the biasing members 16, to the spring holders 12f.

As described in the embodiment, it is preferable that the torsion coil springs 16 bias the diaphragm blades 13 in such a direction that the multiple diaphragm blades 13 reduce the diameter of the aperture stop. This structure makes it possible to further reduce the diameter of the aperture stop when the multiple diaphragm blades 13 are rotated to positions that cause the diameter of the aperture stop to be minimum. In a case where the diaphragm blades 13 are biased by the torsion coil springs 16 in such a direction that the multiple diaphragm blades 13 cause the diameter of the aperture stop to be increased, the diameter of the aperture stop becomes large by the gaps between the cam grooves 14a and the cam protrusions 19 when the diaphragm blades 13 are rotated to positions that cause the diameter of the aperture stop to be minimum. In this structure, however, the diameter of the aperture stop becomes small by the gaps between the cam grooves 14a and the cam protrusions 19 when the diaphragm blades 13 are rotated to the positions that cause the diameter of the aperture stop to be minimum. As a result, the diameter of the aperture stop can be further reduced when the diaphragm blades 13 are rotated to the positions that cause the diameter of the aperture stop to be minimum.

As described in the embodiment, it is preferable that the diaphragm blades 13 be arranged on one side of the bottom plate 12a in the optical axis direction, which is the direction of the optical axis L, the bottom plate 12a have the through holes 12e through which the biasing protrusions 20 pass, the torsion coil springs 16 be disposed on the other side of the bottom plate 12a in the optical axis direction, and the torsion coil springs 16 be engaged with the biasing protrusions 20 on the other side of the bottom plate 12a. In other words, it is preferable that the diaphragm blades 13 be arranged on the front side of the bottom plate 12a, the torsion coil springs 16 be arranged on the rear side of the bottom plate 12a, and the torsion coil springs 16 be engaged with the biasing protrusions 20 on the rear side of the bottom plate 12a. This structure makes it possible to prevent interference between the diaphragm blades 13 and the torsion coil springs 16 even when the torsion coil springs 16 are arranged further on the inner side in the radius direction of the diaphragm device 6. Therefore, this structure can dispose the torsion coil springs 16 further on the inner side in the radius direction of the diaphragm device 6, thereby making it possible to further downsize the diaphragm device 6 in the radius direction.

As described in the embodiment, it is preferable that the diaphragm device 6 include the aperture forming member 12 including: the cylindrical unit 12b having an axial center that is the optical axis L; and the bottom plate 12a formed in an annular shape having an axial center that is the optical axis L and expanding in a flange shape to the outside of the cylindrical unit 12b in the radius direction from one end of the cylindrical unit 12b, and the second arm portions 16c be engaged with the cylindrical unit 12b. This structure makes it possible for the torsion coil springs 16 to be held by the spring holders 12f and the cylindrical unit 12b in a stable state. This structure, in which the second arm portions 16c are engaged with the cylindrical unit 12b disposed on the inner side of the bottom plate 12a in the radius direction of the diaphragm device 6, makes it possible to arrange the torsion coil springs 16 further on the inner side in the radius direction of the diaphragm device 6. As a result, the diaphragm device 6 can be further downsized in the radius direction.

As described in the embodiment, it is preferable that the lens barrel 1 include the diaphragm drive cylinder 7 that is rotated around the optical axis together with the aperture forming member 12 and the connection members 8 that are engaged with the cylindrical unit 12b at one ends thereof and engaged with the diaphragm drive cylinder 7 at the other ends thereof, the diaphragm device 6 include the holding cylinder 11 that holds the aperture forming member 12 such that the aperture forming member 12 is rotatable around the optical axis L, and the holding cylinder 11 hold the blade rotation member 14 in a state where the movement of the blade rotation member 14 in the circumferential direction is restricted to cause the blade rotation member 14 not to move in the circumferential direction with respect to the holding cylinder 11. This structure can downsize the diaphragm device 6 in the radius direction, thereby making it possible to downsize the lens barrel 1 in the radius direction. In the lens barrel 1, the second arm portions 16c of the torsion coil springs 16 are engaged with the cylindrical unit 12b that holds the one sides of the connection members 8. As a result, the lens barrel 1 does not need to be provided with an engagement portion with which the second arm portions 16c are engaged. This makes it possible to simplify the structure of the lens barrel 1.

### Other embodiments

In the embodiment described above, the cam protrusion 19 and the biasing protrusion 20 may be arranged coaxially. In other words, the cam protrusion 19 and the biasing protrusion 20 may overlap when viewed from the front-rear direction. In this case, the cam protrusion 19 and the biasing protrusion 20 are formed integrally with the diaphragm blade 13, for example. In this case, the diaphragm blade 13 formed in a thin flat plate like shape can be prevented from being distorted, although the cam protrusion 19 is in contact with the side surface of the cam groove 14a by the biasing force of the torsion coil spring 16 acting on the biasing protrusion 20.

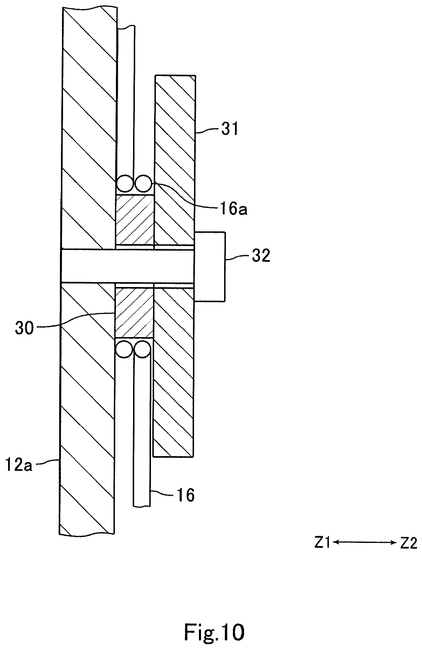

In the embodiment described above, as illustrated in Fig. 10, the torsion coil spring 16 may be attached to the rear surface of the bottom plate 12a with a washer 30, a flat plate 31 having a flat plate like shape, and a screw 32. In this case, the washer 30 is disposed on the inner circumferential side of the winding portion 16a of the torsion coil spring 16. The flat plate 31 is disposed on the rear side of the washer 30. The front surface of the flat plate 31 is in contact with the rear surface of the washer 30. The washer 30 and the flat plate 31 each have a through hole into which the shaft of the screw 32 is inserted. The bottom plate 12a has a screw hole with which a thread formed on the shaft of the screw 32 is screwed. The washer 30 and the flat plate 31 are fixed to the bottom plate 12a by the screw 32. The washer 30 and the flat plate 31 are integrated with the bottom plate 12a. The washer 30 in this case is the biasing member holder that holds a part of the torsion coil spring 16 serving as the biasing member.

In the embodiment described above, the torsion coil springs 16 may bias the diaphragm blades 13 toward the outside in the radius direction. In other words, the torsion coil springs 16 may bias the diaphragm blades 13 in such a direction that the multiple diaphragm blades 13 cause the diameter of the aperture stop to be increased. This case also makes it possible to accurately set the diameter of the aperture stop and to downsize the diaphragm device 6 in the radius direction. In the embodiment described above, the first arm portion 16b and the second arm portion 16c of the torsion coil spring 16 may extend in the same direction from the winding portion 16a.

In the embodiment described above, the biasing members 16 that bias the diaphragm blades 13 may be plate springs, tension coil springs, or compression coil springs. When the biasing member 16 is a plate spring, the biasing member holder, to which one end side of the plate spring is fixed, is formed at a place where the spring holder 12f is formed on the rear surface of the bottom plate 12a, and the other end side of the plate spring is in contact with the biasing protrusion 20 with certain contact pressure, for example. In this case, the plate spring is disposed along the circumferential direction between the biasing member holder and the biasing protrusion 20.

In the embodiment described above, the rotation center protrusion serving as the rotation center of the diaphragm blade 13 may be formed on or fixed to the bottom plate 12a and the insertion hole into which the rotation center protrusion is inserted may be formed in the diaphragm blade 13. The rotation center protrusion serving as the rotation center of the light leakage prevention blade 15 may be formed on or fixed to the bottom plate 12a and the insertion hole into which the rotation center protrusion is inserted may be formed in the light leakage prevention blade 15.

In the embodiment described above, the cam grooves that cause the diaphragm blades 13 to rotate with respect to the bottom plate 12a to change the diameter of the aperture stop may be formed in the diaphragm blades 13 and cam protrusions engaged with the cam grooves may be formed on or fixed to the blade rotation member 14. In the embodiment described above, the diaphragm drive cylinder 7 may be fixed to the lens barrel body 9. In this case, the holding cylinder 11 is rotated to rotate the 11 diaphragm blades 13 with respect to the bottom plate 12a, thereby changing the diameter of the aperture stop. In the embodiment described above, the lens barrel 1 may be used for an optical apparatus other than the imaging device 3.

In the embodiment described above, the widths of the light leakage prevention blades 15 may be increased such that one light leakage prevention blade 15 can completely cover the gap S. However, when the widths of the light leakage prevention blades 15 may be increased such that one light leakage prevention blade 15 can completely cover the gap S, the width of the bottom plate 12a needs to be increased in the radius direction. As a result, the size of the diaphragm device 6 is increased in the radius direction. On the other hand, the embodiment described above can reduce the width of the bottom plate 12a in the radius direction by reducing the widths of the light leakage prevention blades 15, thereby making it possible to downsize the diaphragm device 6 in the radius direction. In the embodiment described above, the gap S is completely covered by the two light leakage prevention blades 15. However, the gap S may be completely covered by three or more light leakage prevention blades 15.

### Reference Signs List

- 1: lens barrel
- 6: diaphragm device
- 7: diaphragm drive cylinder
- 8: connection member
- 11: holding cylinder
- 12: aperture forming member
- 12a: bottom plate
- 12b: cylindrical unit
- 12e: through hole
- 12f: spring holder (biasing member holder)
- 13: diaphragm blade
- 14: blade rotation member
- 14a: cam groove
- 16: torsion coil spring (biasing member)
- 16a: winding portion
- 16b: first arm portion
- 16c: second arm portion
- 19: cam protrusion
- 20: biasing protrusion
- 30: washer (biasing member holder)
- L: optical axis
- M: aperture

## Claims

1. A diaphragm device that changes a diameter of an aperture stop, comprising:
a bottom plate that is formed in an annular shape on which an aperture for an optical path is formed;
a plurality of diaphragm blades that are arranged around an optical axis of the optical path and attached to the bottom plate in a rotatable manner;
a blade rotation member that is formed in an annular shape and is rotated relative to the bottom plate in a circumferential direction around the optical axis to rotate the diaphragm blades with respect to the bottom plate; and
biasing members that bias the respective diaphragm blades to one side in a rotation direction of the multiple diaphragm blades with respect to the bottom plate, wherein
either one of the set of the diaphragm blades and the blade rotation member has cam grooves that cause the diaphragm blades to rotate with respect to the bottom plate to change the diameter of the aperture stop,
either the other of the set of the diaphragm blades and the blade rotation member has cam protrusions that are formed thereon or fixed thereto and are engaged with the cam grooves,
the diaphragm blades have biasing protrusions that are formed thereon or fixed thereto, protrude from surfaces thereof, and are engaged with the biasing members, and
the cam protrusions are in contact with side surfaces of the cam grooves by biasing force of the biasing members.

2. The diaphragm device according to claim 1, wherein
the bottom plate includes biasing member holders each holding a part of the biasing member, and
the biasing member holders each are disposed on one side of the biasing protrusion in the circumferential direction.

3. The diaphragm device according to claim 2, wherein
the biasing members are torsion coil springs each including: a winding portion in which a coil is wound; a first arm portion extending from one end of the winding portion; and a second arm portion extending from the other end of the winding portion,
the first arm portion is engaged with the biasing protrusion, and
the biasing member holder is a protrusion that is inserted into an inner circumferential side of the winding portion.

4. The diaphragm device according to any one of claims 1 to 3, wherein
the biasing members bias the diaphragm blades in such a direction that the multiple diaphragm blades reduce the diameter of the aperture stop.

5. The diaphragm device according to any one of claims 1 to 3, wherein
the diaphragm blades are arranged on one side of the bottom plate in an optical axis direction that is the direction of the optical axis,
the bottom plate has the through holes through which the biasing protrusions pass,
the biasing members are disposed on the other side of the bottom plate in the optical axis direction, and
the biasing members are engaged with the biasing protrusions on the other side of the bottom plate.

6. The diaphragm device according to any one of claims 1 to 3, wherein
the cam protrusion is formed on or fixed to the diaphragm blade and protrudes from one surface of the diaphragm blade,
the biasing protrusion protrudes from the other surface of the diaphragm blade, and
the cam protrusion and the biasing protrusion are arranged coaxially.

7. The diaphragm device according to claim 3, comprising an aperture forming member including: a cylindrical unit having an axial center that is the optical axis; and the bottom plate formed in an annular shape having an axial center that is the optical axis and expanding in a flange shape to the outside of the cylindrical unit in the radius direction from one end of the cylindrical unit, wherein
the second arm portions are engaged with the cylindrical unit.

8. A lens barrel comprising:
the diaphragm device according to claim 7;
a diaphragm drive cylinder that is rotated around the optical axis together with the aperture forming member; and
connection members that are engaged with the cylindrical unit at one ends thereof and engaged with the diaphragm drive cylinder at the other ends thereof, wherein
the diaphragm device includes a holding cylinder that holds the aperture forming member such that the aperture forming member is rotatable around the optical axis, and
the holding cylinder holds the blade rotation member in a state where the movement of the blade rotation member in the circumferential direction is restricted to cause the blade rotation member not to move in the circumferential direction with respect to the holding cylinder.
